# EUROPÄISCHE PATENTSCHRIFT

(11) **EP 3 234 317 B1**
(45) Veröffentlichungstag und Bekanntmachung des Hinweises auf die Patenterteilung: **10.04.2019**
(21) Anmeldenummer: 15813323.1
(22) Anmeldetag: 14.12.2015
(51) Int. Cl.: F01N 3/28, F01N 3/20

(54) **TANKVORRICHTUNG FÜR EINE WÄSSERIGE HARNSTOFFLÖSUNG SOWIE VERFAHREN ZUR REDUZIERUNG EINES EISDRUCKS IN EINER TANKVORRICHTUNG**
TANK DEVICE FOR AN AQUEOUS UREA SOLUTION AND METHOD FOR REDUCING ICE PRESSURE IN A TANK DEVICE
DISPOSITIF DE RÉSERVOIR POUR SOLUTION AQUEUSE D'URÉE ET PROCÉDÉ DE RÉDUCTION DE PRESSION DE GLACE DANS UN DISPOSITIF DE RÉSERVOIR

(30) Priorität: 16.12.2014 DE 102014118760
(43) Veröffentlichungstag der Anmeldung: 25.10.2017
(73) Patentinhaber: Continental Automotive GmbH, 30165 Hannover (DE)
(72) Erfinder: MAGUIN, Georges, 57155 Marly (FR)
(86) Internationale Anmeldenummer: PCT/EP2015/079576
(87) Internationale Veröffentlichungsnummer: WO 2016/096713

(56) Entgegenhaltungen:
- DE-A1-102008 054 803
- DE-A1-102009 002 209
- DE-A1-102009 027 952
- DE-A1-102009 046 954
- DE-A1-102009 046 956
- DE-A1-102009 046 965
- DE-A1-102009 046 965
- DE-A1-102009 047 101
- DE-A1-102012 110 760

## Beschreibung

Die vorliegende Erfindung betrifft eine Tankvorrichtung für eine wässerige Harnstofflösung, insbesondere zur Eindüsung in einen Abgasstrang eines Kraftfahrzeugs sowie ein Verfahren zur Reduzierung eines Drucks in einer entsprechenden Tankvorrichtung. Solche Tankvorrichtungen werden insbesondere in Dieselfahrzeugen verwendet, bei denen mit Hilfe eines SCR (selective catalytic reduction)-Verfahrens Stickoxidemissionen gesenkt werden.

Die DE 102009027952 A1 offenbart einen Tank mit einer geschlossenen Tankwandung. Am Boden des Tanks ist ein Reservoir, bestehend aus mehreren Zellen angeordnet. Aus der DE 102009002209 A1 ist einen Heiztopf, der in einen Tank eingesetzt ist, bekannt, dessen Oberseite einen Deckelabschnitt besitzt, an dem ein Halter befestigt ist.

Das für die SCR-Reaktion benötigte Ammoniak wird in Form einer insbesondere 32, 5 %igen wässerigen Harnstofflösung, die auch als AdBlue® vertrieben wird, in einem Tank der Tankvorrichtung bereitgestellt. Die wässerige Harnstofflösung wird einem SCR-Katalysator in den Abgasstrang zugegeben, beispielsweise mittels einer Dosierpumpe und/oder einem Injektor eingespritzt. Die zur Förderung von Harnstofflösung benötigten Komponenten sind bevorzugt zumindest teilweise in einem Innenraum und/oder auf einem Grund des Tanks angeordnet. Nachteilig an den bekannten Tankvorrichtungen ist, dass beim Einfrieren der wässerigen Harnstofflösung infolge von sehr niedrigen Außentemperaturen durch eine Expansion der wässerigen Harnstofflösung beim Einfrieren ein sehr hoher Druck auf die Dosierpumpe wirken kann, so dass die Dosierpumpe mechanisch beschädigt wird.

Aufgabe der Erfindung ist es daher, die mit Bezug auf den Stand der Technik geschilderten Probleme zumindest teilweise zu lösen und insbesondere eine Tankvorrichtung für eine wässerige Harnstofflösung anzugeben, durch die auch beim Einfrieren der wässerigen Harnstofflösung eine Beschädigung des Tanks oder darin positionierter Fördermodule vermeidbar ist. Darüber hinaus soll auch ein Verfahren zur Reduzierung eines Drucks in einer Tankvorrichtung für eine wässerige Harnstofflösung angegeben werden, durch das eine Beschädigung des Tanks und/oder darin positionierter Fördermodule beim Einfrieren der wässerigen Harnstofflösung vermeidbar ist.

Diese Aufgaben werden gelöst mit einer Tankvorrichtung und einem Verfahren gemäß den Merkmalen der unabhängigen Patentansprüche. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegeben Merkmale in der Beschreibung näher präzisiert und erläutert, wobei weitere bevorzugte Ausgestaltungen der Erfindung dargestellt werden.

Hierfür wird eine Tankvorrichtung für eine wässerige Harnstofflösung vorgeschlagen, welche zumindest die folgenden Komponenten aufweist:
- einen Tank mit einem Tankgehäuse, einem darin befindlichen Innenraum, einem Boden und einer Decke;
- einen separaten Bodenabschnitt, der an dem Tankgehäuse angebracht ist und teilweise den Innenraum begrenzt; und
- eine Lamellenstruktur, die auf einer Oberseite des separaten Bodenabschnitts ausgebildet ist, wobei die Lamellenstruktur zumindest eine Lamelle aufweist, die den Innenraum des Tanks oberhalb des separaten Bodenabschnitts zumindest teilweise in eine Mehrzahl von Zellen unterteilt.

Die hier vorgeschlagene Tankvorrichtung dient insbesondere der Bereitstellung einer wässerigen Harnstofflösung in einem Kraftfahrzeug.

Die Tankvorrichtung weist hierzu einen Tank mit einem Tankgehäuse und damit definierten einem Innenraum auf, in dem die wässerige Harnstofflösung bevorratbar, lagerbar und/oder transportierbar ist. Der Innenraum ist zudem bevorzugt geschlossen, wobei entsprechend der gewünschten Einbaulage ein (unterer) Boden und eine gegenüberliegende (oberer) Decke identifiziert werden kann.

Zur Eindüsung der wässerigen Harnstofflösung in einen Abgasstrang des Kraftfahrzeugs weist die Tankvorrichtung beispielsweise eine, insbesondere elektrische, Pumpe auf, die zumindest teilweise in dem Innenraum des Tanks angeordnet ist. Hierzu kann der Tank insbesondere in einem Boden eine Öffnung aufweisen, durch die die Pumpe in den Innenraum ragt und in der die Pumpe befestigt ist. Weiterhin können elektrische Heizungen, Sensoren, Ventile, etc. zumindest teilweise auch in dem Innenraum des Tankgehäuses positioniert sein. Gerade solche Komponenten werden mit einer Schutzschicht und/oder einer Kammer gegen die wässerige Harnstofflösung geschützt in dem Innenraum angeordnet. Diese Schutzschicht und/oder diese Kammer kann insoweit auch einen separaten Bodenabschnitt des Tanks bilden, weil dieser Bodenabschnitt separat vom Tankgehäuse bereitgestellt und nachfolgend mit dem Tankgehäuse gefügt wird. Jedenfalls ist diese Fügestelle zwischen dem Tankgehäuse und dem separaten Bodenabschnitt besonders kritisch hinsichtlich auftretender Eisexpansionskräfte im Innenraum des Tanks. Der Begriff "Bodenabschnitt" erfasst einen Tankwandabschnitt, der regelmäßig mit der wässerigen Harnstofflösung benetzt bzw. bedeckt ist und liegt damit regelmäßig in der unteren Hälfte des Tanks bzw. direkt im Boden des Tanks. Der Bodenabschnitt bzw. die von dem Bodenabschnitt gebildete Kammer mit darin angeordneten Komponenten (Pumpe, Heizungen, Ventile, etc.) kann auch eine Fördereinheit bilden, die in eine Öffnung in dem Boden des Tanks eingesetzt ist.

Auf einer Oberseite des Bodenabschnitts ist daher eine Lamellenstruktur ausgebildet, die zumindest eine Lamelle aufweist. Bei der zumindest einen Lamelle handelt es sich insbesondere um einen dünnwandigen Körper, beispielsweise eine Platte, Rippe oder Rohrwand. Die zumindest eine Lamelle weist eine Dicke von bevorzugt 1 mm (Millimeter) bis 10 mm auf. Weiterhin erstreckt sich die zumindest eine Lamelle insbesondere vertikal und/oder orthogonal zu der Oberseite des Bodenabschnitts. Weiterhin weist die zumindest eine Lamelle ausgehend von der Oberseite des Bodenabschnitts eine vertikale Höhe von bevorzugt 10 mm bis 500 mm, besonders bevorzugt 100 mm bis 400 mm auf. Ganz besonders bevorzugt ist, dass sich die Lamelle über den maximalen Füllstand der wässerigen Harnstofflösung im Tank hinweg erstreckt, so dass die oberen Enden sicher außerhalb der Harnstofflösung liegen und eine geschlossene Eisdecke über den oder sogar jeden Querschnitt des Innenraums parallel zum Boden verhindern. Die zumindest eine Lamelle der Lamellenstruktur unterteilt den Innenraum des Tanks oberhalb des Bodenabschnitts zumindest teilweise in eine Mehrzahl von Zellen. Unter einer Zelle ist insbesondere ein zumindest teilweise durch die zumindest eine Lamelle begrenzter Teilraum des Innenraums zu verstehen. Weiterhin sind die einzelnen Zellen insbesondere untereinander und/oder mit dem übrigen Innenraum fluidleitend verbunden.

Beim Einfrieren der wässerigen Harnstofflösung in dem Innenraum des Tanks beziehungsweise in den Zellen wird durch die Lamellenstruktur in der gefrorenen wässerigen Harnstofflösung zumindest eine Sollbruchstelle gebildet. Die Sollbruchstelle verläuft dabei insbesondere entlang der zumindest einen Lamelle. Die Oberfläche der zumindest einen Lamelle kann dabei insbesondere derart ausgestaltet sein, dass sich die gefrorene wässerige Harnstofflösung besonders leicht von der Oberfläche der zumindest einen Lamelle lösen kann. Dies kann beispielsweise durch eine entsprechende Oberflächenbehandlung der zumindest einen Lamelle und/oder durch eine Antihaftbeschichtung erreicht werden. Beim Einfrieren der wässerigen Harnstofflösung in dem Tank entsteht oberhalb des Bodenabschnitts regelmäßig eine Kavität beziehungsweise ein Raum mit flüssiger wässeriger Harnstofflösung, die durch gefrorene wässerige Harnstofflösung bedeckt ist. Bei fortschreitendem Einfrieren der wässerigen Harnstofflösung in der Kavität steigt der Druck in der Kavität, bis dass die gefrorene wässerige Harnstofflösung an der zumindest einen Sollbruchstelle bricht, wodurch der Druck in der Kavität und somit der Druck auf den Bodenabschnitt in den Innenraum entweicht. Die Lamellenstruktur ist bevorzugt so gestaltet, dass die durch Eisexpansion auftretenden Kräfte im Tank reduziert werden und insbesondere eine Verlagerung von Blöcken aus gefrorener wässeriger Harnstofflösung in den Zellen aufgrund eines Gegendrucks ausgehend von dem Bodenabschnitt während des Einfrierens ermöglicht bzw. sichergestellt ist.

Ebenfalls vorteilhaft ist es, wenn sich die zumindest eine Lamelle über eine gesamte Breite der Oberseite des Bodenabschnitts erstreckt. Bei der Breite handelt es sich bei einem runden Bodenabschnitt insbesondere um den Durchmesser des Bodenabschnitts. Dementsprechend kann die Breite auch andere Formen des separaten Bodenabschnitts ermittelt werden.

Vorzugsweise decken die von der zumindest einen Lamelle gebildeten Zellen einen Raum in dem Tank oberhalb des Bodenabschnittes vollständig ab bzw. umfassen diesen. Blöcke aus gefrorener wässeriger Harnstofflösung in den einzelnen Zellen sind relativ zueinander (entlang der Lamellen) verschiebbar, wobei die hierfür notwendigen Kräfte um ein Vielfaches geringer sind als die zum Aufbrechen einer Eisdecke aus gefrorener wässeriger Harnstofflösung in dem Tank notwendigen Kräfte. Die Oberfläche der Lamellen der Lamellenstruktur hat vorzugsweise eine geringe Haftung zu Blöcken aus eingefrorener wässeriger Harnstofflösung in dem Tank, so dass Blöcke aus eingefrorener wässeriger Harnstofflösung an der Oberfläche der Lamellen der Lamellenstruktur nicht besonders stark anhaften. Insbesondere werden keine großen Kräfte von den Blöcken aus eingefrorener wässeriger Harnstofflösung auf die Lamellenstruktur übertragen werden ohne das die Blöcke sich relativ zu der Lamellenstruktur verschieben. Besonders bevorzugt ist die Oberfläche der Lamellen der Lamellenstruktur glatt und eine Rauheit [Rₐ] von weniger als 8 µm [Mikrometer].

Weiterhin ist es vorteilhaft, wenn sich die zumindest eine Lamelle mindestens bis zu einer maximalen Füllhöhe des Tanks erstreckt. Bei der maximalen Füllhöhe des Tanks handelt es sich insbesondere um eine maximal zulässige Füllhöhe der wässerigen Harnstofflösung in dem Innenraum während des Betriebs des Tanks. Hierdurch wird gewährleistet, dass sich die durch die zumindest eine Lamelle gebildete zumindest eine Sollbruchstelle auch bei vollem Tank bis zu einer Oberfläche der wässerigen Harnstofflösung erstreckt.

Zudem ist es vorteilhaft, wenn die zumindest eine Lamelle zumindest einen ersten Durchlass aufweist. Durch den zumindest einen ersten Durchlass kann die wässerige Harnstofflösung insbesondere in die Mehrzahl von Zellen fließen. Ganz besonders bevorzugt ist vorgesehen, dass ein Austausch von wässeriger Harnstofflösung zwischen (benachbarten) Zellen ermöglicht ist, insbesondere bis kurz vor dem vollständigen Einfrieren der Harnstofflösung in den jeweiligen Zellen. Der zumindest eine erste Durchlass ist dabei bevorzugt unmittelbar an der Oberseite des Bodenabschnitts angeordnet und weist bevorzugt eine erste vertikale Höhe von 0,1 mm bis 1 mm (Millimeter) auf.

Vorzugsweise ist die Lamellenstruktur nach Art eines Wabenkörpers ausgebildet.

Weiterhin ist es vorteilhaft, wenn die Lamellenstruktur durch ein rohrförmiges Gehäuse umgeben ist. Das rohrförmige Gehäuse verleiht der zumindest einen Lamelle der Lamellenstruktur, bzw. Eisbrecherstruktur, Stabilität. Eine Querschnittsfläche des rohrförmigen Gehäuses entspricht vorzugsweise der Fläche des Bodenabschnitts. Das rohrförmige Gehäuse folgt damit einer Außenkontur des Bodenabschnitts. Wenn der Bodenabschnitt eine Kammer bildet setzt das rohrförmige Gehäuse die Form der Kammer (nach oben) hin zur Tankdecke fort.

Ferner ist es vorteilhaft, wenn das rohrförmige Gehäuse zumindest einen zweiten Durchlass aufweist. Durch den zumindest einen zweiten Durchlass kann die wässerige Harnstofflösung insbesondere in die Mehrzahl von Zellen fließen. Der zumindest eine zweite Durchlass ist dabei bevorzugt unmittelbar an der Oberseite der des Bodenabschnitts angeordnet und weist bevorzugt eine zweite vertikale Höhe von 0,1 mm bis 1 mm auf.

Erste Durchlässe der zumindest einen Lamelle und zweite Durchlässe des rohrförmigen Gehäuses bilden vorzugsweise ein Kanalsystem, welches sämtliche Zellen der Lamellenstruktur miteinander verbindet und durch welches ein Austausch von wässeriger Harnstofflösung im Betrieb notwendig ist. Normalerweise gefriert wässerige Harnstofflösung in den ersten Durchlässen und den zweiten Durchlässen sehr spät bzw. sogar zuletzt und Blöcke aus gefrorener wässeriger Harnstofflösung in den Zellen der Lamellenstruktur haben sich dann bereits verschoben. Es ist aber auch möglich, dass in den ersten Durchlässen und den zweiten Durchlässen wässerige Harnstofflösung gefriert und erst anschließend eine relative Verschiebung von Blöcken aus gefrorener wässeriger Harnstofflösung in den einzelnen Zellen auftritt. Dann fungieren die Durchlässe als Sollbruchstellen an denen der Verbund aus gefrorener wässeriger Harnstofflösung durch Scherkräfte aufbricht. Die Durchlässe sind bevorzugt so klein, dass die notwendigen Kräfte zum Durchbrechen der gefrorenen wässerigen Harnstofflösung in den Durchlässen klein sind und insbesondere so klein, dass eine relative Verschiebung des Bodenabschnitts durch diese Kräfte nicht ausgelöst wird sondern stattdessen eine Trennung des Verbunds in Blöcke aus gefrorener wässeriger Harnstofflösung an den Durchlässen stattfindet. Vorzugsweise haben die ersten Durchlässe und zweiten Durchlässe jeweils eine Querschnittsfläche von zwischen 1 mm² und 10 mm² [Quadratmillimeter] und jeweils eine Länge zwischen 1 mm und 5 mm [Millimeter] . Es hat sich herausgestellt, dass Abschnitte aus gefrorener wässeriger Harnstofflösung in solchen Durchlässen noch unter relativ geringen Kräften brechen, so dass Blöcke aus gefrorener wässeriger Harnstofflösung in den einzelnen Zellen der Lamellenstruktur verschiebbar sind.

Gemäss der Erfindung verjüngt sich zumindest eine Lamelle nach oben hin. Die Verjüngung der zumindest einen Lamelle erfolgt dabei relativ zu einer Senkrechten zur Oberseite des Bodenabschnitts mit einem Winkel von bevorzugt 0,4° bis 0,6° (Grad), besonders bevorzugt 0,5°.

Dies reduziert die Reibung von gefrorener wässeriger Harnstofflösung an den Blöcken und unterstützt insbesondere eine relative Verschiebung von Blöcken aus gefrorener wässeriger Harnstofflösung in den Zellen der Lamellenstruktur nach oben.

Weiterhin ist es vorteilhaft, wenn die Lamellenstruktur zumindest teilweise aus Polyoxymethylen (POM), Polyethylen-HD (PE-HD) oder Polypropylen (PP) besteht. Ganz besonders bevorzugt, besteht diese Lamellenstruktur nur aus einem der vorgenannten Materialien.

Gemäß einem weiteren Aspekt wird auch ein Verfahren zur Reduzierung eines Drucks in einer Tankvorrichtung für eine wässerige Harnstofflösung angegeben, das zumindest die folgenden Schritte aufweist:
a) Bereitstellen einer hier vorgeschlagenen Tankvorrichtung;
b) Befüllen des Tanks der Tankvorrichtung mit der wässerigen Harnstofflösung, so dass zumindest eine Lamelle der Lamellenstruktur zumindest teilweise mit der wässerigen Harnstofflösung bedeckt ist; und
c) Einfrieren der wässerigen Harnstofflösung, wobei in der gefrorenen wässerigen Harnstofflösung eine Kavität mit flüssiger wässeriger Harnstofflösung entsteht, wobei die flüssige wässerige Harnstofflösung in der Kavität durch gefrorene wässerige Harnstofflösung bedeckt ist und wobei die zumindest eine Lamelle die gefrorene wässerige Harnstofflösung, die die flüssige wässerige Harnstofflösung bedeckt, durchdringt, so dass durch die zumindest eine Lamelle eine die gefrorene wässerige Harnstofflösung in mehrere Zellen unterteilt ist, die sich beim Einfrieren relativ zueinander verschieben können.

Der Verfahrensschritt a) entspricht üblicherweise der Herstellung der beschriebenen Tankvorrichtung oder der Montage der beschriebenen Tankvorrichtung in einem Kraftfahrzeug. Verfahrensschritt b) beschreibt hier eine Erstbefüllung des Tanks mit wässeriger Harnstofflösung oder eine Wiederbefüllung. Verfahrensschritt b) umfasst auch, eine teilweise Wiederbefüllung, wenn der Tank durch den Betrieb einer angeschlossenen Dosiervorrichtung teilweise entleert wurde. Der Tank wird in Verfahrensschritt b) üblicherweise nur so weit befüllt, dass die zumindest eine Lamelle teilweise mit Flüssigkeit bedeckt ist und abschnittsweise aus der Flüssigkeit heraus steht.

Verfahrensschritt c) umfasst einerseits Einfriervorgänge bei denen zuvor die gesamte wässerige Harnstofflösung im Tank in flüssigem Zustand war (Ersteinfriervorgänge) . Verfahrensschritt c) umfasst darüber hinaus auch Einfriervorgänge bei denen zuvor bereits die gesamte wässerige Harnstofflösung in dem Tank gefroren war, anschließend teilweise aufgetaut ist und dann wieder beginnt einzufrieren (erneute Einfriervorgänge).

Bei Ersteinfriervorgängen friert üblicherweise zunächst eine Oberfläche der wässerigen Harnstofflösung ein, so dass sich dort eine Eisschicht bildet. Diese Eisschicht wächst während des Einfrierens nach unten in die noch flüssige Harnstofflösung hinein und wird dadurch immer dicker. Ein oberer Bereich der Eisschicht bildet dann eine feststehende Grenze für die Eisschicht aus. Das Wachstum der Eisschicht nach unten beim Einfrieren erzeugt in Verbindung mit der Volumenausdehnung der wässerigen Harnstofflösung beim Einfrieren einen starken Druck, der auf den Boden des Tanks und insbesondere auf den separaten Bodenabschnitt des Tanks drückt. Es können spezielle Wärmeleitstrukturen an dem Tank und in dem Tank vorgesehen sein, durch dieses Einfrierverhalten zumindest teilweise modifiziert wird, so dass das Wachstum der Eisschicht nicht zwangsläufig von der Oberfläche der wässerigen Harnstofflösung nach unten stattfindet sondern teilweise auch nach unten. So kann der Druck auf den Boden der Tankvorrichtung und insbesondere auf den Bodenabschnitt zumindest teilweise reduziert werden.

Bei sogenannten erneuten Einfriervorgängen ist insbesondere problematisch, dass die wässerige Harnstofflösung vorzugsweise zunächst in unmittelbarer Nähe des Bodenabschnittes und in unmittelbarer Nähe einer an dem Bodenabschnitt angeordneten Fördereinheit aufgetaut wird, weil dort Heizungen vorgesehen sind mit denen die Bereitstellung von wässeriger Harnstofflösung ermöglicht wird. Üblicherweise bildet sich in Umgebung des Bodenabschnitts eine Kavität in der gefrorenen wässerigen Harnstofflösung aus, die mit wässeriger Harnstofflösung gefüllt ist. Durch ein erneutes Einfrieren der wässerigen Harnstofflösung in dieser Kavität kann ebenfalls ein sehr hoher Druck auf den Boden des Tanks und insbesondere auf den Bodenabschnitt erzeugt werden.

Durch die zumindest eine Lamelle wird die gefrorene wässeriger Harnstofflösung in umittelbarer in eine Mehrzahl von Blöcken unterteilt, die sich jeweils in den Zellen der Lamellenstruktur befinden und die relativ zueinander verschiebbar sind und die sich beim weiteren Einfrieren der wässerigen Harnstoff-Lösung relativ zueinander verschieben, um den Aufbau von Druck zu reduzieren. Vorzugweise existieren nur relativ dünne Durchlässe durch die zumindest eine Lamelle, die flüssigkeitsdurchlässige Verbindungen zwischen den einzelnen Zellen. Wenn die wässerige Harnstofflösung in dem Tank vollständig gefriert sind diese Durchlässe auch mit gefrorener wässeriger Harnstofflösung gefüllt. Die gefrorene wässerige Harnstofflösung in diesen Durchlässen bildet sogenannte Sollbruchstellen zwischen den einzelnen Zellen aus gefrorener wässeriger Harnstofflösung aus. Durch auftretenden Unterdruck oder Überdruck bei Auftauen der gefrorenen wässerigen Harnstofflösung oder beim erneuten Einfrieren der gefrorenen wässerigen Harnstofflösung können die Segmente an diesen Sollbruchstellen auseinanderbrechen, um eine relative Verschiebung der einzelnen Segmente zueinander zu ermöglichen.

Bezüglich weiterer Einzelheiten des Verfahrens wird auch auf die Beschreibung der Tankvorrichtung verwiesen. Die im Zusammenhang mit dem beschriebenen Verfahren erläuterten Ausführungsmerkmale und Vorteile sind genauso auch auf die beschriebene Tankvorrichtung übertragbar.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: Einfrierprozess einer wässerigen Harnstofflösung bei einer Tankvorrichtung ohne Lamellenstruktur;
- Fig. 2:: eine Tankvorrichtung mit Lamellenstruktur;
- Fig. 3:: eine Ausführungsvariante einer Lamellenstruktur;
- Fig. 4:: ein Detail einer Ausführungsvariante einer Lamellenstruktur; und
- Fig. 5:: eine Ausführungsvariante einer Lamelle.

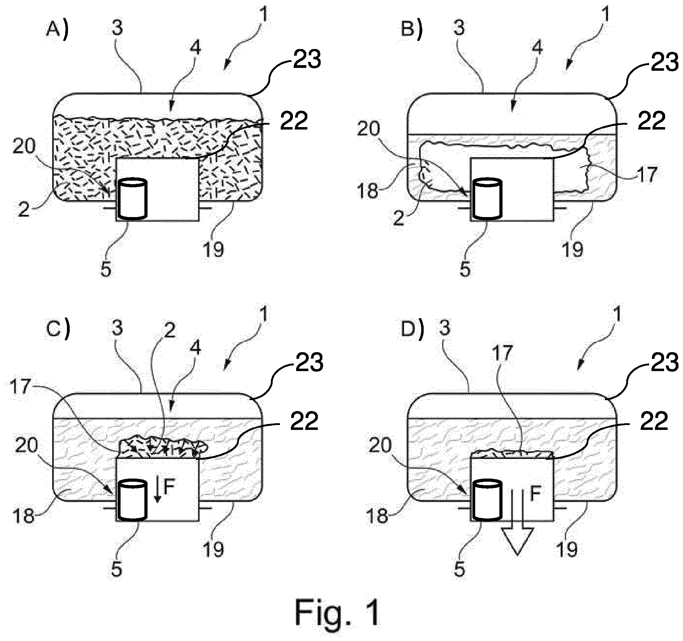

Die Fig. 1 zeigt einen Einfrierprozess einer wässerigen Harnstofflösung 2 in einer aus dem Stand der Technik bekannten Tankvorrichtung 1. Die Tankvorrichtung 1 weist in den Abbildungen A, B, C und D einen Tank 3 mit einem Innenraum 4 auf. Weiterhin weist der Tank 3 einen Boden 19 mit einer Öffnung 20 auf, durch die sich ein separater Bodenabschnitt 22 erstreckt, hier beispielsweise gebildet mit einem Kammergehäuse mit einer darin befindlichen Pumpe 5, das sich in den Innenraum 4 des Tanks 3 erstreckt. In der Abbildung A ist die wässerige Harnstofflösung 2 in dem Innenraum 4 des Tanks 3 flüssig. In der Abbildung B ist die wässerige Harnstofflösung 2 infolge von niedrigen Außentemperaturen in einem äußeren Bereich des Innenraums 4 zu gefrorener wässeriger Harnstofflösung 18 gefroren. Hierdurch hat sich in der gefrorenen wässerigen Harnstofflösung 18 eine Kavität 17 mit noch flüssiger wässeriger Harnstofflösung 2 gebildet. In der Abbildung C ist die flüssige wässerige Harnstofflösung 2 in der Kavität 17 weiter gefroren, so dass ein Druck in der Kavität 17 steigt, der auf den Bodenabschnitt 22 wirkt. Friert die flüssige wässerige Harnstofflösung 2 in der Kavität 17, wie in der Abbildung D gezeigt, weiter ein, steigt der Druck in der Kavität 17 auf ein Niveau, so dass der Bodenabschnitt beschädigt (z. B. verformt oder gar aus dem Tankgehäuse 23 herausgedrückt) werden könnte.

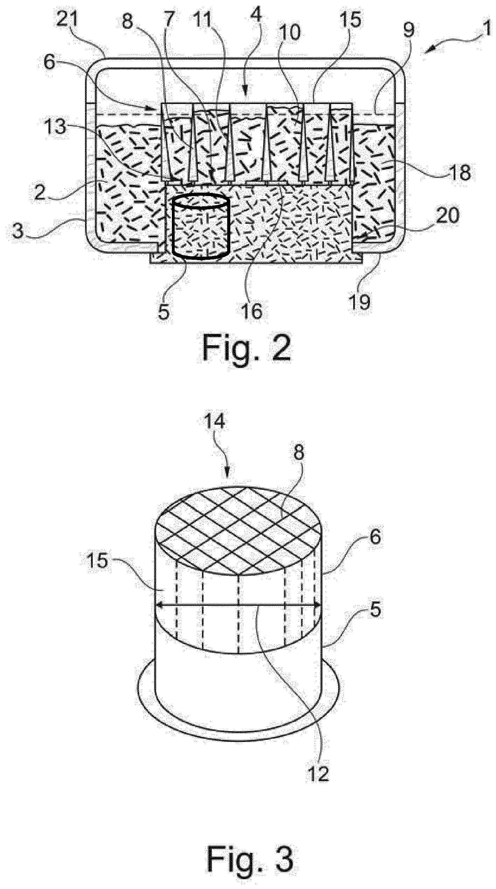

Die Fig. 2 zeigt eine Schnittdarstellung durch eine Tankvorrichtung 1 mit einer Lamellenstruktur. Die Tankvorrichtung 1 weist einen Tank 3 mit einem Innenraum 4 auf. Der Innenraum 4 ist bis zu einer maximalen Füllhöhe 9 mit wässeriger Harnstofflösung 2 befüllbar. Der Tank 3 weist in einem Boden 19 eine Öffnung 20 auf, durch die sich ein separater Bodenabschnitt 22 erstreckt, hier beispielsweise wieder gebildet mit einem Kammergehäuse mit einer darin befindlichen Pumpe 5, das sich in den Innenraum 4 des Tanks 3 erstreckt. Auf einer Oberseite 7 des Bodenabschnitts 22 ist eine Lamellenstruktur 6 durch Punktschweißverbindungen befestigt. Die Lamellenstruktur 6 weist eine Mehrzahl von vertikalen Lamellen 8 auf, die den Innenraum 4 des Tanks 3 oberhalb des Bodenabschnitts 22 in einer Mehrzahl von Zellen 10 unterteilen. Die Mehrzahl von Lamellen 8 weisen jeweils an der Oberseite 7 des Bodenabschnitts 22 erste Durchlässe 13 auf, durch die die wässerige Harnstofflösung 2 zwischen den einzelnen Zellen 10 fließen kann. Weiterhin werden die Mehrzahl von Lamellen 8 durch ein rohrförmiges Gehäuse 15 umgeben, wie dies auch in der Fig. 2 zu erkennen ist. Das rohrförmige Gehäuse 15 weist einen zweiten Durchlass 16 auf, durch die wässerige Harnstofflösung 2 in die Mehrzahl von Zellen 10 fließen kann. Friert die wässerige Harnstofflösung 2 zu gefrorener wässeriger Harnstofflösung 18 ein, bricht die gefrorene wässerige Harnstofflösung 18 an durch die Mehrzahl von Lamellen 8 gebildeten Sollbruchstellen 11. Um diesen Vorgang zu unterstützen, verjüngen sich die Mehrzahl von Lamellen 8 in Richtung einer Decke 21 des Tanks 3. Hierdurch wird ein Beschädigen des Bodenabschnitts 22 bzw. darunter befindlicher Komponenten wie eine Pumpe 5 vermieden.

Die Fig. 3 zeigt einen zylindrisch in den Innenraum des Tanks hineinragenden separaten Bodenabschnitt 22 mit der Lamellenstruktur 6 der in der Fig. 2 gezeigten Tankvorrichtung 1. Die Lamellen 8 erstrecken sich über eine gesamte Breite 12 des Bodenabschnitts 22. Weiterhin ist die Lamellenstruktur 6 nach Art eines Wabenkörpers 14 ausgebildet, der von einem rohrförmigen Gehäuse 15 umgeben ist.

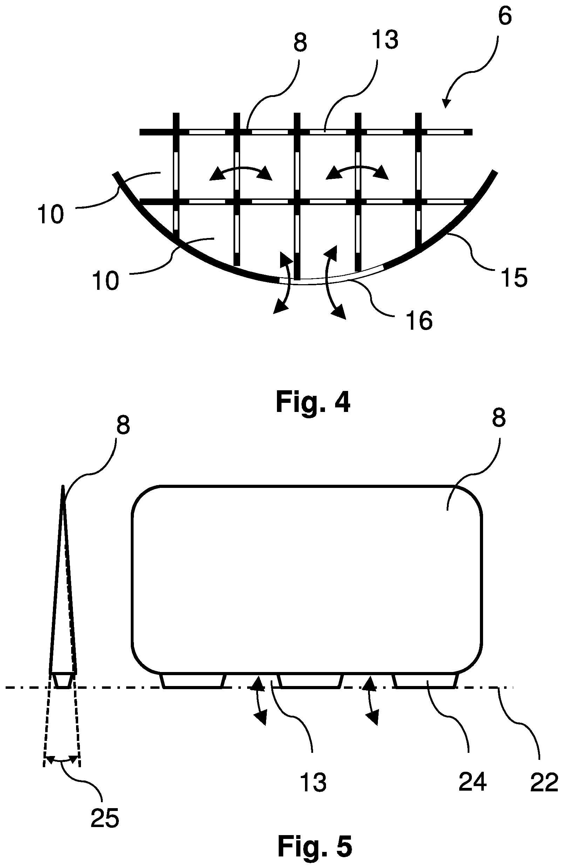

Die Fig. 4 zeigt nun im Detail und im Querschnitt einen Randbereich einer Lamellenstruktur 6 mit einem rohrförmigen Gehäuse 15. Zu erkennen ist, dass in diesem Querschnitt einerseits erste Öffnungen 13 in bzw. an den einzelnen Lamellen 8 und andererseits auch zweite Öffnungen 16 in dem rohrförmigen Gehäuse 15 positioniert sind. Beide schließen bevorzugt unmittelbar an dem Bodenabschnitt an, können aber hinsichtlich Form, Anzahl und/oder Größe angepasst sein. Die zweiten Öffnungen 16 lassen einen Strömungsaustausch (angedeutet mit Pfeilen) durch das rohrförmige Gehäuse 15 zu, so dass die mit bzw. von der Lamellenstruktur 6 gebildete Zellen 10 mit der wässerigen Harnstofflösung aus dem Tank gefüllt werden können und umgekehrt. Ein Austausch von wässeriger Harnstofflösung innerhalb benachbarter Zellen 10 wird mittels der ersten Öffnungen 13 ermöglicht und sichergestellt.

Schließlich veranschaulicht Fig. 5 in einer Frontalansicht (links) und einer Seitenansicht (rechts) eine bevorzugte Ausführungsvariante einer Lamelle 8, die sich einerseits nach oben also weg vom Bodenabschnitt 22 hin mit einem vorgegebenen Winkel 25 verjüngt. Ebenso ist zu erkennen, dass die Lamelle mehrere Füße 24 aufweist, zwischen denen die erste Öffnungen 13 hin zum Bodenabschnitt 22 gebildet sind. Die Lamelle 8 kann an diesen Füße 24 auch unverlierbar mit dem Bodenabschnitt 22 verbunden sein.

## Patentansprüche

1. Tankvorrichtung (1) für eine wässerige Harnstofflösung (2, 18) zur Eindüsung in einen Abgasstrang eines Kraftfahrzeugs, aufweisend:
- einen Tank (3) mit einem Tankgehäuse (19), einem darin befindlichen Innenraum (4), einem Boden (23) und einer Decke (21);
- einen separaten Bodenabschnitt (22), der an dem Tankgehäuse (19) angebracht ist und teilweise den Innenraum (4) begrenzt; und
- eine Lamellenstruktur (6), die auf einer Oberseite (7) des separaten Bodenabschnitts (22) ausgebildet ist, wobei die Lamellenstruktur (6) zumindest eine Lamelle (8) aufweist, die den Innenraum (4) des Tanks (3) oberhalb des Bodenabschnitts (22) zumindest teilweise in eine Mehrzahl von Zellen (10) unterteilt, **dadurch gekennzeichnet, dass** sich die zumindest eine Lamelle (8) nach oben verjüngt.

2. Tankvorrichtung (1) nach Patentanspruch 1, wobei sich die zumindest eine Lamelle (8) über eine gesamte Breite (12) der Oberseite (7) des Bodenabschnitts (22) erstreckt.

3. Tankvorrichtung (1) nach einem der vorhergehenden Patentansprüche, wobei sich die zumindest eine Lamelle (8) mindestens bis zu einer maximalen Füllhöhe (9) des Tanks (3) erstreckt.

4. Tankvorrichtung (1) nach einem der vorhergehenden Patentansprüche, wobei die zumindest eine Lamelle (8) zumindest einen ersten Durchlass (13) aufweist.

5. Tankvorrichtung (1) nach einem der vorhergehenden Patentansprüche, wobei die Lamellenstruktur (6) nach Art eines Wabenkörpers (14) ausgebildet ist.

6. Tankvorrichtung (1) nach einem der vorhergehenden Patentansprüche, wobei die Lamellenstruktur (6) durch ein rohrförmiges Gehäuse (15) umgeben ist.

7. Tankvorrichtung (1) nach Patentanspruch 6, wobei das rohrförmige Gehäuse (15) zumindest einen zweiten Durchlass (16) aufweist.

8. Tankvorrichtung (1) nach einem der vorhergehenden Patentansprüche, wobei die Lamellenstruktur (6) zumindest teilweise aus Polyoxymethylen, Polyethylen-HD oder Polypropylen besteht.

9. Verfahren zur Reduzierung eines Drucks in einer Tankvorrichtung (1) für eine wässerige Harnstofflösung (2, 18) zur Eindüsung in einen Abgasstrang eines Kraftfahrzeugs, aufweisend zumindest die folgenden Schritte:
a) Bereitstellen einer Tankvorrichtung (1) nach einem der vorhergehenden Patentansprüche;
b) Befüllen eines Tanks (3) der Tankvorrichtung (1) mit der wässerigen Harnstofflösung (2), so dass zumindest eine Lamelle (8) einer Lamellenstruktur (6) der Tankvorrichtung (1) zumindest teilweise mit der wässerigen Harnstofflösung (2, 18) bedeckt ist; und
c) Einfrieren der wässerigen Harnstofflösung (2), so dass in der gefrorenen wässerigen Harnstofflösung (18) eine Kavität (17) mit flüssiger wässeriger Harnstofflösung (2) entsteht, wobei die flüssige wässerige Harnstofflösung (2) in der Kavität (17) durch gefrorene wässerige Harnstofflösung (18) bedeckt ist und wobei die zumindest eine Lamelle (8) die gefrorene wässerige Harnstofflösung (18), die die flüssige wässerige Harnstofflösung (2) bedeckt, zumindest teilweise durchdringt, so dass durch die zumindest eine Lamelle (8) die gefrorenen wässerigen Harnstofflösung (18) in mehrere Zellen unterteilt wird, die sich beim Einfrieren relativ zueinander verschieben können, wobei sich zumindest eine Lamelle (8) nach oben verjüngt.

## Claims

1. Tank device (1) for an aqueous urea solution (2, 18) for injection into an exhaust tract of a motor vehicle, having:
- a tank (3) with a tank housing (23), with an interior (4) situated therein, with a base (19) and with a top wall (21);
- a separate base section (22), which is attached to the tank housing (19) and partially delimits the interior (4); and
- a lamellar structure (6) which is formed on a top side (7) of the separate base section (22), wherein the lamellar structure (6) has at least one lamella (8) which divides the interior (4) of the tank (3) above the base section (22) at least partially into a multiplicity of cells (10), **characterized in that** the at least one lamella (8) tapers in an upward direction.

2. Tank device (1) according to Patent Claim 1, wherein the at least one lamella (8) extends over an entire width (12) of the top side (7) of the base section (22).

3. Tank device (1) according to one of the preceding patent claims, wherein the at least one lamella (8) extends at least as far as a maximum fill level (9) of the tank (3).

4. Tank device (1) according to one of the preceding patent claims, wherein the at least one lamella (8) has at least one first passage (13).

5. Tank device (1) according to one of the preceding patent claims, wherein the lamellar structure (6) is formed in the manner of a honeycomb body (14).

6. Tank device (1) according to one of the preceding patent claims, wherein the lamellar structure (6) is surrounded by a tubular housing (15).

7. Tank device (1) according to Patent Claim 6, wherein the tubular housing (15) has at least one second passage (16).

8. Tank device (1) according to one of the preceding patent claims, wherein the lamellar structure (6) is composed at least partially of polyoxymethylene, HD polyethylene or polypropylene.

9. Method for reducing a pressure in a tank device (1) for an aqueous urea solution (2, 18) for injection into an exhaust tract of a motor vehicle, having at least the following steps:
a) provision of a tank device (1) according to one of the preceding patent claims;
b) filling of a tank (3) of the tank device (1) with the aqueous urea solution (2) such that at least one lamella (8) of a lamellar structure (6) of the tank device (1) is at least partially covered by the aqueous urea solution (2, 18); and
c) freezing of the aqueous urea solution (2) such that a cavity (17) with liquid aqueous urea solution (2) is formed in the frozen aqueous urea solution (18), wherein the liquid aqueous urea solution (2) in the cavity (17) is covered by frozen aqueous urea solution (18), and wherein the at least one lamella (8) at least partially extends through the frozen aqueous urea solution (18) covering the liquid aqueous urea solution (2), such that the at least one lamella (8) divides the frozen aqueous urea solution (18) into multiple cells which can be displaced relative to one another during the freezing process, wherein at least one lamella (8) tapers in an upward direction.

## Revendications

1. Dispositif de réservoir (1) pour une solution aqueuse d'urée (2, 18) destinée à être injectée dans une ligne d'échappement d'un véhicule automobile, présentant :
- un réservoir (3) avec un boîtier de réservoir (19), un espace interne s'y trouvant (4), un fond (23) et un couvercle (21) ;
- une portion de fond séparée (22) qui est montée sur le boîtier de réservoir (19) et qui limite partiellement l'espace interne (4) ; et
- une structure à lamelles (6) qui est réalisée sur un côté supérieur (7) de la portion de fond séparée (22), la structure à lamelles (6) présentant au moins une lamelle (8) qui divise l'espace interne (4) du réservoir (3) au-dessus de la portion de fond (22) au moins en partie en une pluralité de cellules (10),
**caractérisé en ce que** l'au moins une lamelle (8) se rétrécit vers le haut.

2. Dispositif de réservoir (1) selon la revendication 1, dans lequel l'au moins une lamelle (8) s'étend sur toute la largeur (12) du côté supérieur (7) de la portion de fond (22) .

3. Dispositif de réservoir (1) selon l'une quelconque des revendications précédentes, dans lequel l'au moins une lamelle (8) s'étend au moins jusqu'à une hauteur de remplissage maximale (9) du réservoir (3).

4. Dispositif de réservoir (1) selon l'une quelconque des revendications précédentes, dans lequel l'au moins une lamelle (8) présente au moins un premier passage (13).

5. Dispositif de réservoir (1) selon l'une quelconque des revendications précédentes, dans lequel la structure à lamelles (6) est réalisée à la manière d'un corps en nid d'abeilles (14).

6. Dispositif de réservoir (1) selon l'une quelconque des revendications précédentes, dans lequel la structure à lamelles (6) est entourée par un boîtier de forme tubulaire (15) .

7. Dispositif de réservoir (1) selon la revendication 6, dans lequel le boîtier de forme tubulaire (15) présente au moins un deuxième passage (16).

8. Dispositif de réservoir (1) selon l'une quelconque des revendications précédentes, dans lequel la structure à lamelles (6) se compose au moins en partie de polyoxyméthylène, de polyéthylène-HD ou de polypropylène.

9. Procédé pour réduire une pression dans un dispositif de réservoir (1) pour une solution aqueuse d'urée (2, 18) destinée à être injectée dans une ligne d'échappement d'un véhicule automobile, présentant au moins les étapes suivantes :
a) fournir un dispositif de réservoir (1) selon l'une quelconque des revendications précédentes ;
b) remplir un réservoir (3) du dispositif de réservoir (1) avec la solution aqueuse d'urée (2), de telle sorte qu'au moins une lamelle (8) d'une structure à lamelles (6) du dispositif de réservoir (1) soit au moins en partie recouverte par la solution aqueuse d'urée (2, 18) ; et
c) geler la solution aqueuse d'urée (2) de telle sorte qu'une cavité (17) avec de la solution aqueuse d'urée liquide (2) se forme dans la solution aqueuse d'urée gelée (18), la solution aqueuse d'urée liquide (2) dans la cavité (17) étant recouverte par la solution aqueuse d'urée gelée (18) et l'au moins une lamelle (8) traversant au moins en partie la solution aqueuse d'urée gelée (18) qui recouvre la solution aqueuse d'urée liquide (2) de telle sorte que la solution aqueuse d'urée gelée (18) soit divisée en plusieurs cellules par l'au moins une lamelle (8), lesdites cellules pouvant être déplacées les unes par rapport aux autres lors du gel, au moins une lamelle (8) se rétrécissant vers le haut.
